(19) Europäisches Patentamt
European Patent Office
Office européen des brevets

(11) EP 3 480 032 B1

(12) EUROPEAN PATENT SPECIFICATION

(45) Date of publication and mention of the grant of the patent:
**24.02.2021 Bulletin 2021/08**

(51) Int Cl.:
***B60C 1/00*** *(2006.01)* ***C08C 19/02*** *(2006.01)*
***C08L 9/06*** *(2006.01)*

(21) Application number: **18201704.6**

(22) Date of filing: **22.10.2018**

# (54) DIENE COPOLYMER AND RUBBER COMPOSITION

DIEN-COPOLYMER UND KAUTSCHUKZUSAMMENSETZUNG

COPOLYMÈRE DE DIÈNE ET COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2017 JP 2017212764**

(43) Date of publication of application:
**08.05.2019 Bulletin 2019/19**

(73) Proprietor: **Sumitomo Rubber Industries, Ltd.
Kobe-shi, Hyogo 651-0072 (JP)**

(72) Inventor: **WASHIZU, Kensuke
Kobe-shi,, Hyogo 651-0072 (JP)**

(74) Representative: **TBK
Bavariaring 4-6
80336 München (DE)**

(56) References cited:
**EP-A1- 2 824 116**
**EP-A1- 2 963 087**
**EP-A1- 3 216 828**
**JP-A- 2015 086 315**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to a rubber composition in which a diene copolymer is used, and a pneumatic tire.

Description of the Background Art

Tread rubbers for high-performance tires and the like are generally required to have both high grip performance and high abrasion resistance. Conventionally, as rubber compositions that exhibit high grip performance, a rubber composition in which styrene-butadiene copolymer rubber (SBR) having a high glass transition temperature (Tg) is used, a rubber composition in which a process oil is substituted by a high-softening-point resin, a rubber composition highly filled with a softener or carbon black, a rubber composition in which small-particle-diameter carbon black is used, a rubber composition in which these components are used in combination, and the like, are known.

However, the rubber composition in which the SBR having high Tg is used has great temperature dependency and therefore has a problem of having great performance change with respect to temperature change. In the case where the process oil is substituted by the high-softening-point resin, if the amount of substitution is large, temperature dependency is increased due to influence of the high-softening-point resin. In addition, in the case where the small-particle-diameter carbon black and a large amount of the softener are used, the dispersibility of the carbon black is poor, and thus there is a problem in that abrasion resistance decreases.

As for a technique to solve these problems, a rubber composition in which a low-molecular-weight styrene-butadiene copolymer or a partially-hydrogenated low-molecular-weight styrene-butadiene copolymer is used, has been proposed (see Japanese Laid-Open Patent Publication No. 63-101440). According to the description of Japanese Laid-Open Patent Publication No. 63-101440, a hydrogenation rate is limited due to bleeding of the low-molecular-weight component.

EP2824116 (A1) relates to a hydrogenated branched conjugated diene copolymer prepared by copolymerizing 1 to 99% by weight of a branched conjugated diene compound, 99 to 0% by weight of a conjugated diene compound, and/or 99 to 0% by weight of a vinyl compound, and then hydrogenating the resulting copolymer, wherein the hydrogenated branched conjugated diene copolymer is useful as a rubber component of a rubber composition for a tire.

JP2015-086315 (A) relates to a pneumatic tire having tread rubber comprising a rubber composition, which comprises, based on a diene rubber component of 100 pts.mass comprising styrene-butadiene rubber of 10-100 mass%, a predetermined branched conjugated diene copolymer and/or hydrogenated body thereof of 10-150 pts.mass, and a predetermined inorganic compound of 5-30 pts.mass.

EP2963087 (A1) relates to a tire member obtained by subjecting a composition containing a hydrogenated conjugated diene polymer and a crosslinking agent to a crosslinking treatment, wherein the hydrogenated conjugated diene polymer is a hydrogenated product of a conjugated diene polymer that has a structural unit derived from butadiene and has a functional group at one end or both ends and the functional group is one or more groups selected from the group consisting of an amino group, an imino group, a pyridyl group, a phosphino group, a thiol group, and a hydrocarbyloxysilyl group.

Meanwhile, a coefficient of friction evaluated with a wet road surface and a dry road surface reproduced on a skid tester is used as an index for wet grip performance and dry grip performance of rubber, and performance is better when the coefficient of friction on each road surface is higher. Furthermore, for endurance of grip performance, that is, for reducing amounts of change in grip performance in the initial stage, in the middle stage, and in the later stage, it is necessary to decrease temperature dependency of the hardness of the rubber. However, from the viewpoint of abrasion resistance, when tanδ of the rubber is increased, the hardness at room temperature increases, and thus abrasion resistance tends to deteriorate.

As described above, abrasion resistance and grip performance generally has a trade-off relationship, and thus improvement of performance balance therebetween is desired.

The present invention has been made to solve the above-described problems, and an object of the present invention is to provide a rubber composition in which a diene copolymer is used that can improve abrasion resistance and grip performance in a balanced manner, and a pneumatic tire.

SUMMARY OF THE INVENTION

The present invention is directed to a rubber composition containing 5 to 200 parts by mass of a diene copolymer (B) per 100 parts by mass of a rubber component including a diene polymer (A) having a weight-average molecular

weight of 100 thousand to 3 million, wherein the diene copolymer (B) has a linear conjugated diene monomer unit and a branched conjugated diene monomer unit, a weight-average molecular weight of 1000 to 3000000 and a hydrogenation rate of not less than 15%, and wherein the mass ratio of the linear conjugated diene monomer unit amount to the branched conjugated diene monomer unit amount in 100% by mass of the diene copolymer (B) (linear conjugated diene monomer unit amount/branched conjugated diene monomer unit amount) is 88/12 to 75/25.

In the rubber composition, a difference between aromatic vinyl monomer unit amounts in the diene copolymer (B) and the diene polymer (A) preferably satisfies the following formula.

$$\text{aromatic vinyl monomer unit amount (\% by mass) in 100\% by mass of diene copolymer (B)} - \text{aromatic vinyl monomer unit amount (\% by mass) in 100\% by mass of diene polymer (A)} < 50\% \text{ by mass}$$

The rubber composition preferably contains 10 to 200 parts by mass of an organic compound (C) that is in liquid form at 130°C, per 100 parts by mass of the rubber component.

The rubber composition preferably contains 10 to 200 parts by mass of a filler per 100 parts by mass of the rubber component.

A peak temperature of tanδ of the rubber composition measured under conditions of a strain of 1% and a frequency of 10 Hz is preferably not higher than 10°C.

The present invention is also directed to a pneumatic tire produced using the rubber composition.

According to the present invention, since the diene copolymer (B) has a linear conjugated diene monomer unit and a branched conjugated diene monomer unit, has a weight-average molecular weight of 1000 to 3000000, and has a hydrogenation rate of not less than 15%, abrasion resistance and grip performance can be improved in a balanced manner.

## DESCRIPTION OF THE PREFERRED EMBODIMENTS

### [Diene Copolymer (B)]

The diene copolymer (B) of the present invention is a polymer composition having a predetermined weight-average molecular weight and having a linear conjugated diene monomer unit and a branched conjugated diene monomer unit as constituent units of the copolymer. The diene copolymer (B) has a hydrogenation rate not less than a predetermined value. Accordingly, abrasion resistance and grip performance can be improved in a balanced manner.

The reason why such an advantageous effect is achieved is not necessarily clear but is inferred as described below.

By adding not only a linear conjugated diene monomer but also a branched conjugated diene monomer and copolymerizing these monomers, crystallization of the side chains (substituents) in the branched conjugated diene monomer is inhibited, and compatibility with a polymer is increased. Furthermore, by hydrogenating the copolymer, the compatibility with a polymer is further increased. As a result, tanδ of the rubber composition is increased, and thus performance balance between abrasion resistance and grip performance, which generally have a trade-off relationship, is inferred to be significantly improved.

By using the diene copolymer (B), it is also possible to achieve favorable performance such as inhibition of adhesion of a rubber in a kneading step such as a Banbury mixer step and an open roll step, processability of an unvulcanized rubber, and mechanical strength such as fracture resistance characteristics of the rubber composition.

The weight-average molecular weight (Mw) of the diene copolymer (B) is 1000 to 3000000. By setting the weight-average molecular weight (Mw) to be not less than the lower limit, bleeding of the diene copolymer (B) tends to be able to be inhibited. By setting the weight-average molecular weight (Mw) to be not greater than the upper limit, favorable processability tends to be achieved. As for the lower limit of the Mw, the Mw is preferably not less than 1500, more preferably not less than 2000, and further preferably not less than 3000. As for the upper limit of the Mw, the Mw is preferably not greater than 2000000, more preferably not greater than 1000000, further preferably not greater than 90000, particularly preferably not greater than 30000, and most preferably not greater than 10000.

From the viewpoint of improvement of performance balance between abrasion resistance and grip performance, the molecular weight distribution (Mw/Mn) of the diene copolymer (B) is preferably 0.20 to 2.00, more preferably 0.70 to 1.50, and further preferably 0.85 to 1.35.

In the present specification, the Mw and the Mn of the polymer can be obtained by conversion, based on polystyrene standard, of a value measured by gel permeation chromatography (GPC) (GPC-8000 series manufactured by Tosoh Corporation, detector: differential refractometer, column: TSKGEL SUPERMALTPORE HZ-M manufactured

by Tosoh Corporation).

The Mw of the diene copolymer (B) can be controlled by adjusting the amount of each monomer or the amount of a polymerization catalyst (polymerization initiator) to be added at the time of polymerization. For example, the Mw can be increased by increasing an entire monomer/anion polymerization initiator ratio or an entire monomer/coordination polymerization initiator ratio. On the other hand, the Mw can be decreased by decreasing such a ratio. The same applies to the Mn.

The hydrogenation rate of double bonds in the diene copolymer (B) (the hydrogenation rate in 100% of double bonds in an unhydrogenated product) is not less than 15% (15 mol%). By setting the hydrogenation rate to be not less than the lower limit, favorable abrasion resistance tends to be achieved. The hydrogenation rate is preferably not less than 25% and more preferably not less than 30%. The upper limit of the hydrogenation rate is not particularly limited, but the hydrogenation rate is preferably not greater than 90%, more preferably not greater than 70%, and further preferably not greater than 60%.

In the present specification, the hydrogenation rate is a value that is calculated by the following equation from respective integral values of double bond-derived peaks obtained by 1H-NMR (proton NMR). In the present specification, the hydrogenation rate means the hydrogenation rate of double bonds.

$$(\text{Hydrogenation rate [\%]}) = \{(A\text{-}B)/A\} \times 100$$

A: integral value of peaks of double bonds before hydrogenation
B: integral value of peaks of double bonds after hydrogenation

The diene copolymer (B) has a linear conjugated diene monomer unit and a branched conjugated diene monomer unit. The linear conjugated diene monomer that forms the linear conjugated diene monomer unit is a monomer having a carbon skeleton with a linear structure (a monomer having no side chain (substituent including one or more carbon atoms)). The branched conjugated diene monomer that forms the branched conjugated diene monomer unit is a monomer having a carbon skeleton with a branched structure (a monomer having a side chain (a substituent including one or more carbon atoms)).

The linear conjugated diene monomer is not particularly limited, and examples of the linear conjugated diene monomer include 1,3-butadiene, 1,3-pentadiene, and 1,3-hexadiene. These monomers may be used individually, or two or more of these monomers may be used in combination. Among them, 1,3-butadiene is preferable from the viewpoint of performance balance between abrasion resistance and grip performance.

The branched conjugated diene monomer is not particularly limited, and examples of the branched conjugated diene monomer include isoprene and 2,3-dimethyl-1,3-butadiene. Among them, isoprene is preferable. As the branched conjugated diene monomer, a compound represented by the following formula (1) can be also suitably used. These monomers may be used individually, or two or more of these monomers may be used in combination.

[Chem. 1]

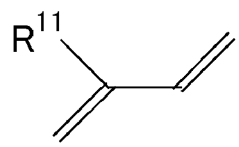

(1)

(wherein $R^{11}$ represents an aliphatic hydrocarbon group having 6 to 11 carbon atoms.)

Examples of the aliphatic hydrocarbon group having 6 to 11 carbon atoms as $R^{11}$ include groups having a normal structure such as a hexyl group, a heptyl group, an octyl group, a nonyl group, a decyl group, and an undecyl group, isomers and unsaturated groups thereof, and derivatives (halogenated groups, hydroxylated groups, etc.) thereof. Among them, a 4-methyl-3-pentenyl group, a 4,8-dimethyl-nona-3,7-dienyl group, and derivatives thereof are preferable.

As specific examples of the compound represented by the above formula (1), for example, myrcene, farnesene, etc., can be suitably used.

The term "myrcene" includes both α-myrcene (2-methyl-6-methyleneocta-1,7-diene) and β-myrcene. Among them, β-myrcene having the following structure (7-methyl-3-methyleneocta-1,6-diene) is preferable.

[Chem. 2]

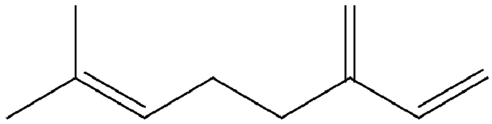

Meanwhile, the term "farnesene" includes any isomers such as α-farnesene ((3E,7E)-3,7,11-trimethyl-1,3,6,10-dodecatetraene) and β-farnesene. Among them, (E)-β-farnesene having the following structure (7,11-dimethyl-3-methylene-1,6,10-dodecatriene) is preferable.

[Chem. 3]

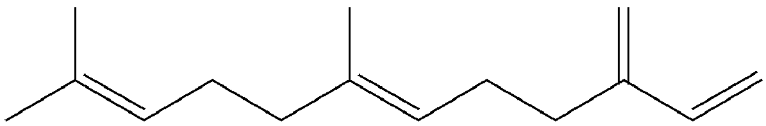

From the viewpoint of grip performance and the above performance balance, the diene copolymer (B) preferably has another monomer (a vinyl monomer having one vinyl group, etc.) as a constituent unit in addition to the linear conjugated diene monomer unit and the branched conjugated diene monomer unit.

As the vinyl monomer having one vinyl group, for example, a compound represented by the following formula (2) can be suitably used.

[Chem. 4]

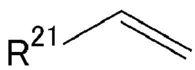 (2)

(wherein $R^{21}$ represents a hydrogen atom, an aliphatic hydrocarbon group having 1 to 3 carbon atoms, an alicyclic hydrocarbon group having 3 to 8 carbon atoms, or an aromatic hydrocarbon group having 6 to 10 carbon atoms.)

Examples of the aliphatic hydrocarbon group having 1 to 3 carbon atoms as $R^{21}$ include a methyl group, an ethyl group, an n-propyl group, and an isopropyl group. Examples of the alicyclic hydrocarbon group having 3 to 8 carbon atoms include a cyclopropyl group, a cyclobutyl group, a cyclopentyl group, a cyclohexyl group, a cycloheptyl group, a cyclooctyl group, a cyclopropenyl group, a cyclobutenyl group, a cyclopentenyl group, a cyclohexenyl group, a cycloheptenyl group, and a cyclooctenyl group. Examples of the aromatic hydrocarbon group having 6 to 10 carbon atoms include a phenyl group, a benzyl group, a phenethyl group, a tolyl group, a xylyl group, and a naphthyl group. The position of substitution of the methyl group on the benzene ring in a tolyl group includes ortho position, meta position, and para position, and the position of substitution of the methyl group in a xylyl group also includes any positions of substitution. Among them, a phenyl group, a tolyl group, and a naphthyl group are preferable.

Suitable specific examples of the vinyl monomer having one vinyl group include aromatic vinyl monomers such as styrene, α-methylstyrene, α-vinylnaphthalene, and β-vinylnaphthalene, and styrene and α-methylstyrene are particularly preferable.

The diene copolymer (B) can be synthesized, for example, by adding a linear conjugated diene monomer, a branched conjugated diene monomer, a polymerization catalyst, etc., to a reaction media and carrying out polymerization. Here, the method for polymerization of the monomers is not particularly limited as long as the method is a known method, and examples of the method include anionic polymerization, coordination polymerization, cationic polymerization, and emulsion polymerization.

Specifically, the diene copolymer (B) (hydrogenated product) can be prepared, for example, by a method in which, in anionic polymerization or coordination polymerization described below, a linear conjugated diene monomer, a branched conjugated diene monomer, a polymerization catalyst (polymerization initiator), etc., are added to a reaction media (solvent) and copolymerization is carried out to obtain an unhydrogenated diene copolymer, and then the unhydrogenated diene copolymer is hydrogenated.

<Anionic Polymerization>

Anionic polymerization can be carried out by adding a linear conjugated diene monomer, a branched conjugated

diene monomer, an anionic polymerization initiator as a polymerization catalyst, etc., to an appropriate reaction media (solvent), and then carrying out copolymerization in the solvent in the presence of the anionic polymerization initiator.

As the anionic polymerization initiator, any of commonly used ones can be used, and examples thereof include an organic lithium compound having a general formula RLix (R is an aliphatic, aromatic, or alicyclic group having one or more carbon atoms, and "x" is an integer from 1 to 20.). Examples of appropriate organic lithium compounds include methyllithium, ethyllithium, n-butyllithium, sec-butyllithium, tert-butyllithium, phenyllithium, and naphthyllithium. Preferable organic lithium compounds are n-butyllithium and sec-butyllithium. The anionic polymerization initiators can be used individually, or two or more of the anionic polymerization initiators can be mixed and used. The amount of the polymerization catalyst (anionic polymerization initiator) to be used when anionic polymerization is carried out is not particularly limited, but, for example, 0.05 to 35 mmol of the polymerization catalyst is preferably used per 100 g of the entire monomer to be subjected to polymerization.

As the solvent (reaction media) to be used for anionic polymerization, any solvent can be suitably used as long as the solvent does not deactivate the anionic polymerization initiator and does not terminate a polymerization reaction. Any of a polar solvent and a nonpolar solvent can be used. Examples of the polar solvent include ether-based solvents such as tetrahydrofuran, and examples of the nonpolar solvent include chain hydrocarbons such as hexane, heptane, octane, and pentane, cyclic hydrocarbons such as cyclohexane, and aromatic hydrocarbons such as benzene, toluene, and xylene. These solvents can be used individually, or two or more of these solvents can be mixed and used.

Anionic polymerization is preferably carried out in the presence of a polar compound. Examples of the polar compound include dimethyl ether, diethyl ether, ethyl methyl ether, ethyl propyl ether, tetrahydrofuran, dioxane, diphenyl ether, tripropylamine, tributylamine, trimethylamine, triethylamine, and N,N,N',N'-tetramethylethylenediamine (TMEDA). The polar compounds can be used individually, or two or more of the polar compounds can be mixed and used. The polar compound is useful for controlling the microstructure of a polymer. The amount of the polar compound to be used depends on the type of the polar compound and the polymerization conditions, but is preferably not less than 0.001 as a molar ratio to the anionic polymerization initiator (polar compound/anionic polymerization initiator). By setting the molar ratio to be not less than 0.001, the effect of the polar compound controlling the microstructure tends to be sufficiently achieved.

The reaction temperature in anionic polymerization is not particularly limited as long as the reaction suitably proceeds, but, normally, the reaction temperature is preferably -10 to 100°C and more preferably 25 to 70°C. The reaction time depends on the added amounts, the reaction temperature, and other conditions, but, normally, the reaction time is sufficiently about 3 hours.

Anionic polymerization can be terminated by adding a reaction terminator that is normally used in this field. Examples of such a reaction terminator include polar solvents having active protons, such as alcohols including methanol, ethanol, and isopropanol, or acetic acid, and mixed solutions thereof, or mixed solutions of these polar solvents and nonpolar solvents such as hexane and cyclohexane. Normally, the added amount of the reaction terminator is sufficiently a molar amount that is equal to or approximately double the molar amount of the anionic polymerization initiator.

After the polymerization reaction is terminated, the unhydrogenated diene copolymer can be easily isolated by removing the solvent from the polymerization solution by a normal method, or pouring the polymerization solution into an alcohol, of which the amount is 1 time or more of the amount of the polymerization solution, to precipitate the unhydrogenated diene copolymer.

<Coordination Polymerization>

Coordination polymerization can be carried out by using a coordination polymerization initiator as a polymerization catalyst instead of the anionic polymerization initiator in anionic polymerization.

As the coordination polymerization initiator, any of commonly used ones can be used, and examples thereof include catalysts that are transition metal-containing compounds such as a lanthanoid compound, a titanium compound, a cobalt compound, and a nickel compound. In addition, an aluminum compound or a boron compound can be further used as a promoter as desired.

The lanthanoid compound is not particularly limited as long as the lanthanoid compound is a compound containing any of elements with atomic numbers of 57 to 71 (lanthanoid), but neodymium is particularly preferable. Examples of the lanthanoid compound include carboxylates, β-diketone complexes, alkoxides, phosphates or phosphites, and halides of these elements. Among them, from the viewpoint of easy handling, carboxylates, alkoxides, and β-diketone complexes are preferable. Examples of the titanium compound include titanium-containing compounds each containing a cyclopentadienyl group, an indenyl group, a substituted cyclopentadienyl group, or a substituted indenyl group and having three substituents each of which is a substituent selected from halogens, alkoxysilyl groups, and alkyl groups. From the viewpoint of catalyst performance, a titanium-containing compound having one alkoxysilyl group is preferable. Examples of the cobalt compound include halides, carboxylates, β-diketone complexes, organic base complexes, and organic phosphine complexes of cobalt. Examples of the nickel compound include halides, carboxylates, β-diketone

complexes, and organic base complexes of nickel. The coordination polymerization initiators can be used individually, or two or more of the coordination polymerization initiators can be used in combination. The amount of the polymerization catalyst (coordination polymerization initiator) to be used in carrying out coordination polymerization is not particularly limited, but is preferably equal to the amount of the polymerization catalyst to be used in the case of anionic polymerization.

Examples of the aluminum compound to be used as a promoter include organic aluminoxanes, halogenated organoaluminum compounds, organoaluminum compounds, and hydrogenated organoaluminum compounds. Examples of the organic aluminoxanes include alkyl aluminoxanes (methyl aluminoxane, ethyl aluminoxane, propyl aluminoxane, butyl aluminoxane, isobutyl aluminoxane, octyl aluminoxane, hexyl aluminoxane, etc.); examples of the halogenated organoaluminum compounds include halogenated alkyl aluminum compounds (dimethyl aluminum chloride, diethyl aluminum chloride, methyl aluminum dichloride, ethyl aluminum dichloride, etc.); examples of the organoaluminum compounds include alkyl aluminum compounds (trimethyl aluminum, triethyl aluminum, triisopropyl aluminum, triisobutyl aluminum, etc.); and examples of the hydrogenated organoaluminum compounds include hydrogenated alkyl aluminum compounds (diethyl aluminum hydride, diisobutyl aluminum hydride, etc.). In addition, examples of the boron compound include compounds containing anionic species such as tetraphenyl borate, tetrakis(pentafluorophenyl)borate, and (3,5-bistrifluoromethylphenyl)borate. These promoters can be also used individually, or two or more of these promoters can be used in combination.

Regarding coordination polymerization, as a reaction media (solvent) and a polar compound, those described for anionic polymerization can be similarly used. In addition, the reaction time and the reaction temperature are also the same as those described for anionic polymerization. Termination of a polymerization reaction and isolation of an unhydrogenated diene copolymer can be also performed in the same manner as in the case of anionic polymerization.

Next, the diene copolymer (B) (hydrogenated product) can be prepared by hydrogenating the unhydrogenated diene copolymer obtained by anionic polymerization or coordination polymerization. The hydrogenation can be carried out by a known method, and, for example, any of a method by catalytic hydrogenation with a metal catalyst, a method using hydrazine, etc., can be suitably used (see Japanese Laid-Open Patent Publication No. 59-161415, etc.). For example, the catalytic hydrogenation with the metal catalyst can be carried out by adding hydrogen in the presence of the metal catalyst in an organic solvent with pressure applied, and tetrahydrofuran, methanol, ethanol, n-hexane, etc., can be suitably used as the organic solvent. These organic solvents can be used individually, or two or more of these organic solvents can be mixed and used. As the metal catalyst, for example, palladium, platinum, rhodium, ruthenium, nickel, etc., can be used. These metal catalysts can be used individually, or two or more of these metal catalysts can be mixed and used. The pressure applied is preferably, for example, 1 to 300 $kgf/cm^2$.

The diene copolymer (B) (hydrogenated product) may be not only an unmodified polymer obtained by the above-described production method or the like, but also a modified polymer. The modified diene copolymer (B) can be prepared by carrying out a modification reaction by a known method. Examples of the method include a method in which a polar group is introduced to a terminal by adding a terminal modifier containing a hetero atom at the time of termination of the above anionic polymerization or coordination polymerization reaction, and examples of the hetero atom include Si, N, and O atoms. Specific examples of the modifier include modifiers for a later-described diene polymer (A).

As for the lower limit of the branched conjugated diene monomer unit amount (the amount of the branched conjugated diene monomer) in 100% by mass of the diene copolymer (B), this amount is preferably not less than 1% by mass, more preferably not less than 5% by mass, and further preferably not less than 7% by mass. As for the upper limit of this amount, this amount is preferably not greater than 50% by mass, more preferably not greater than 25% by mass, and further preferably not greater than 20% by mass. By setting this amount within the above range, performance balance between abrasion resistance and grip performance tends to be significantly improved.

From the viewpoint of the above performance balance, the mass ratio of the linear conjugated diene monomer unit amount to the branched conjugated diene monomer unit amount in 100% by mass of the diene copolymer (B) (linear conjugated diene monomer unit amount/branched conjugated diene monomer unit amount) is 88/12 to 75/25.

In the case where the diene copolymer (B) is a copolymer having a linear conjugated diene monomer unit, a branched conjugated diene monomer unit, and a vinyl monomer unit having one vinyl group, the vinyl monomer unit amount (the amount of the vinyl monomer) in 100% by mass of the diene copolymer (B) is preferably not less than 10% by mass, more preferably not less than 20% by mass, and further preferably not less than 25% by mass. As for the upper limit of this amount, this amount is preferably not greater than 60% by mass, more preferably not greater than 50% by mass, and further preferably not greater than 40% by mass. By setting the amount within the above range, performance balance between abrasion resistance and grip performance tends to be significantly improved. Also in the case where an aromatic vinyl monomer is used as the vinyl monomer, the amount of the vinyl monomer is preferably in the same range. In addition, the branched conjugated diene monomer unit amount, and linear conjugated diene monomer unit amount/branched conjugated diene monomer unit amount (mass ratio) are suitably in the same ranges as described above.

[Rubber Composition]

The rubber composition of the present invention contains: a rubber component including a diene polymer (A) having a weight-average molecular weight (Mw) of 100 thousand to 3 million; and the diene copolymer (B). By using the rubber composition, performance balance between abrasion resistance and grip performance can be significantly improved.

The Mw of the diene polymer (A) is not less than 100 thousand, preferably not less than 150 thousand, and more preferably not less than 300 thousand. By setting the Mw to be not less than the lower limit, favorable abrasion resistance and favorable grip performance tend to be achieved. The Mw is not greater than 3 million, preferably not greater than 1.5 million, more preferably not greater than 1 million, and further preferably not greater than 0.8 million. By setting the Mw to be not greater than the upper limit, favorable processability tends to be achieved.

From the viewpoint of improvement of performance balance between abrasion resistance and grip performance, the molecular weight distribution (Mw/Mn) of the diene polymer (A) is preferably 0.20 to 2.00, more preferably 0.70 to 1.50, and further preferably 0.85 to 1.35.

From the viewpoint of the above performance balance, the diene polymer (A) preferably has an aromatic vinyl monomer unit in addition to a conjugated diene monomer unit. Examples of the conjugated diene monomer that forms the conjugated diene monomer unit include the linear conjugated diene monomer and the branched conjugated diene monomer described above, and examples of the aromatic vinyl monomer that forms the aromatic vinyl monomer unit include the same monomers as described above.

The aromatic vinyl monomer unit amount (the amount of the aromatic vinyl monomer) in 100% by mass of the diene polymer (A) is preferably not less than 10% by mass and more preferably not less than 20% by mass. By setting this amount to be not less than the lower limit, favorable grip performance tends to be achieved. The aromatic vinyl monomer unit amount is preferably not greater than 50% by mass and more preferably not greater than 45% by mass. By setting this amount to be not greater than the upper limit, heat generation is reduced, and thus favorable low fuel consumption performance tends to be achieved.

In the present specification, the aromatic vinyl monomer unit amount (the amount of the aromatic vinyl monomer) in the polymer is calculated by 1H-NMR measurement.

In the rubber composition, the difference between the aromatic vinyl monomer amounts (the amounts of the aromatic vinyl monomer) in the diene copolymer (B) and the diene polymer (A) preferably satisfies the following formula.

$$\text{Aromatic vinyl monomer unit amount (\% by mass) in 100\% by mass of diene copolymer (B)} - \text{aromatic vinyl monomer unit amount (\% by mass) in 100\% by mass of diene polymer (A)} < 50\% \text{ by mass}$$

By setting the difference to be less than 50% by mass, favorable compatibility of the diene copolymer (B) and the diene polymer (A) is achieved, and thus favorable physical properties of the rubber composition tend to be achieved. The difference is more preferably not greater than 40% by mass and further preferably not greater than 20% by mass. The lower limit of the difference is not particularly limited, and the difference may be 0. In addition, the aromatic vinyl monomer unit amounts in the diene copolymer (B) and the diene polymer (A) may be 0% by mass.

In the rubber composition, the difference between the Mw of the diene polymer (A) and the Mw of the diene copolymer (B) preferably satisfies the following formula.

$$\text{Mw of diene polymer (A)} - \text{Mw of diene copolymer (B)} \geq 100 \text{ thousand}$$

By setting the difference to be not less than 100 thousand, favorable performance balance between abrasion resistance and grip performance tends to be achieved. The difference is more preferably not less than 150 thousand and further preferably not less than 200 thousand. The upper limit of the difference is not particularly limited, but the difference is preferably not greater than 3 million, more preferably not greater than 2 million, and further preferably not greater than 1 million.

In the rubber composition, the amount of the diene polymer (A) in 100% by mass of the rubber component is preferably not less than 50% by mass, more preferably not less than 70% by mass, and further preferably not less than 90% by mass, and may be 100% by mass. When this amount is not less than the lower limit, performance balance between abrasion resistance and grip performance is significantly improved.

Specific examples of the diene polymer (A) include isoprene-based rubbers and diene-based rubbers such as

butadiene rubber (BR), styrene-butadiene rubber (SBR), acrylonitrile-butadiene rubber (NBR), chloroprene rubber (CR), isobutylene-isoprene-rubber (IIR), and styrene-isoprene-butadiene copolymer rubber (SIBR). These rubbers may be used individually, or two or more of these rubbers may be used in combination. Among them, isoprene-based rubbers, BR, and SBR are preferable, and SBR is particularly preferable from the viewpoint of performance balance between abrasion resistance and grip performance.

The SBR is not particularly limited, and, for example, emulsion-polymerized styrene-butadiene rubber (E-SBR), solution-polymerized styrene-butadiene rubber (S-SBR), etc., can be used. As the SBR, any of unmodified SBR and modified SBR can be used. As commercially available products, for example, products manufactured by and available from Sumitomo Chemical Co., Ltd., JSR Corporation, Asahi Kasei Corporation, Zeon Corporation, etc., can be used.

In the case where SBR is used as the diene polymer (A), the same numerical ranges as those described above for the diene polymer (A) are preferably used for the amount, the Mw, and the Mw/Mn of the SBR, and the amount of styrene is preferably in the same range as that for the aromatic vinyl monomer unit amount. In addition, in the case where SBR is used as the diene polymer (A) and a styrene-butadiene copolymer is used as the diene copolymer (B), the difference in styrene amount and the difference in Mw between the SBR and the styrene-butadiene copolymer are preferably in the same numerical ranges as those for the difference in aromatic vinyl monomer unit amount and the difference in Mw between the diene copolymer (B) and the diene polymer (A) described above.

The modified SBR only needs to be SBR having a functional group that interacts with a filler such as silica, and examples of such modified SBR include end-modified SBR obtained by modifying at least one end of SBR with a compound (modifier) having the functional group (end-modified SBR having the functional group at an end thereof), main chain-modified SBR having the functional group in the main chain thereof, main chain/end-modified SBR having the functional group in the main chain and at an end thereof (for example, main chain/end-modified SBR that has the functional group in the main chain thereof and in which at least one end thereof is modified with the modifier), and end-modified SBR that is modified (coupled) by using a multifunctional compound having two or more epoxy groups in the molecule thereof and to which a hydroxyl group or an epoxy group is introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

As the modified SBR, SBR modified with a compound (modifier) represented by the following formula is particularly suitable.

[Chem. 5]

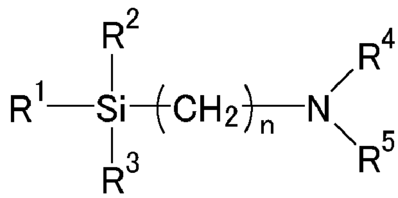

(wherein $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^S$ may be linked together to form a ring structure together with a nitrogen atom. "n" represents an integer.)

As the modified SBR modified with the compound (modifier) represented by the above formula, SBR obtained by modifying the polymerization terminals (active terminals) of solution-polymerized styrene butadiene rubber (S-SBR) with the compound represented by the above formula (modified SBR disclosed in Japanese Laid-Open Patent Publication No. 2010-111753, etc.) is suitably used.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably 1 to 5, more preferably 2 to 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among them, 3-dimethylaminopropyl trimethoxysilane, 3-dimethylaminopropyl triethoxysilane, and 3-diethylaminopropyl trimethoxysilane are preferable. These compounds may be used individually, or two or more of these compounds may be used in combination.

As the modified SBR, modified SBR modified with the following compound (modifier) can also be suitably used. Examples of the modifier include: polyglycidyl ethers of polyhydric alcohols such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

Sulfide group-containing silane compounds such as (trimethylsilyl)[3-(trimethoxysilyl)propyl] sulfide, (trimethylsilyl) [3 -(triethoxysilyl)propyl] sulfide, (trimethylsilyl) [3 -(tripropoxysilyl)propyl] sulfide, (trimethylsilyl)[3 -(tributoxysilyl)propyl] sulfide, (trimethylsilyl) [3 -(methyldimethoxysilyl)propyl] sulfide, (trimethylsilyl) [3 - (methyldiethoxysilyl)propyl] sulfide, (trimethylsilyl)[3 -(methyldipropoxysilyl)propyl] sulfide, and (trimethylsilyl) [3 -(methyldibutoxysilyl)propyl] sulfide;

N-substituted azilidine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Among them, modified SBR modified with alkoxysilanes is preferable.

Modification with the above compounds (modifiers) can be carried out by a known method.

Examples of isoprene-based rubbers include natural rubber (NR), isoprene rubber (IR), reformed NR, modified NR, and modified IR. As NR, NRs that are generally used in the tire industry, such as SIR20, RSS#3, and TSR20 can be used. As IR, IRs that are generally used in the tire industry, such as IR2200, can be used. Examples of reformed NR include deproteinized natural rubber (DPNR) and ultra pure natural rubber (UPNR), examples of modified NR include epoxidized natural rubber (ENR), hydrogenated natural rubber (HNR), and grafted natural rubber, and examples of modified IR include epoxidized isoprene rubber, hydrogenated isoprene rubber, and grafted isoprene rubber. These rubbers may be used individually, or two or more of these rubbers may be used in combination.

The rubber composition does not particularly have to contain an isoprene-based rubber. In the case where the rubber component contains an isoprene-based rubber, the amount of the isoprene-based rubber in 100% by mass of the rubber component is preferably 1 to 30% by mass and more preferably 1 to 15% by mass.

The BR is not particularly limited, and any of unmodified BR and modified BR can be used. Examples of the BR include BRs that are generally used in the tire industry, such as BR having a high cis content, BR containing 1,2-syndiotactic polybutadiene crystal (SPB-containing BR), butadiene rubber synthesized by using a rare earth element catalyst (rare earth BR), and tin-modified butadiene rubber (tin-modified BR) modified with a tin compound. As for the BR, as commercially available products, products of Ube Industries, Ltd., JSR Corporation, Asahi Kasei Corporation, Zeon Corporation, etc., can be used. These BRs can be used individually, or two or more of these BRs may be used in combination.

The rubber composition does not particularly have to contain BR. In the case where the rubber component

contains BR, the amount of the BR in 100% by mass of the rubber component is preferably 1 to 30% by mass and more preferably 1 to 15% by mass.

The rubber composition contains the diene copolymer (B), and the amount of the diene copolymer (B) per 100 parts by mass of the rubber component is preferably not less than 5 parts by mass, more preferably not less than 10 parts by mass, and further preferably not less than 15 parts by mass. In addition, this amount is preferably not greater than 200 parts by mass, more preferably not greater than 100 parts by mass, and further preferably not greater than 80 parts by mass. By setting this amount within the above range, favorable performance balance between abrasion resistance and grip performance tends to be achieved.

From the viewpoint of imparting plasticity, the rubber composition preferably contains an organic compound (C) that is in liquid form at 130°C.

The melting point or the glass transition temperature (Tg) of the organic compound (C) is preferably not higher than 130°C from the viewpoint of imparting plasticity and the favorable performance balance. The lower limit thereof is not particularly limited.

In the present specification, the melting point can be, for example, a melting peak temperature measured using a DSC measuring device. The Tg can be measured by performing differential scanning calorimetry (DSC) under a condition of a temperature rise rate of 10°C/min according to JIS K 7121.

The amount of the organic compound (C) per 100 parts by mass of the rubber component is preferably not less than 10 parts by mass, more preferably not less than 20 parts by mass, and further preferably not less than 30 parts by mass. By setting this amount to be not less than the lower limit, the peak temperature of tan$\delta$ of the rubber composition measured under conditions of a strain of 1% and a frequency of 10 Hz is inhibited from being equal to or higher than 10°C, and embrittlement tends to be able to be prevented. In addition, this amount is preferably not greater than 200 parts by mass, more preferably not greater than 100 parts by mass, and further preferably not greater than 80 parts by mass. By setting this amount to be not greater than the upper limit, favorable processability tends to be achieved in the rubber composition.

The amount of the organic compound (C) also includes the amount of oil contained in rubber (oil-extended rubber).

Examples of the organic compound (C) include mineral oils, vegetable oils, low-temperature plasticizers containing a hetero atom, and resins. Examples of the mineral oils include aromatic mineral oils, naphthenic mineral oils, and paraffinic mineral oil. Examples of the vegetable oils include flaxseed oil, safflower oil, soybean oil, corn oil, cotton seed oil, rape oil, castor oil, tung oil, pine oil, sunflower oil, palm oil, olive oil, coconut oil, and peanut oil. Examples of the low-temperature plasticizers containing a hetero atom include ether-based plasticizers, ester-based plasticizers, phosphate-based plasticizers, and sulfonic acid-based plasticizers. The mineral oils, the vegetable oils, and the plasticizers generally have a melting point of not higher than 130°C and are in liquid form at 130°C.

Examples of the resins include hydrocarbon resins, coumarone-indene resins, terpene resins, phenolic resins, and acrylic resins all of which have a softening point of not higher than 160°C. Generally, when the softening point of a resin is 160°C, the glass transition temperature of the resin is not higher than 130°C, and thus the resin is in liquid form at 130°C.

Examples of the hydrocarbon resins include styrene resins.

A styrene resin is a polymer in which a styrene monomer is used as a constituent monomer, and examples of styrene resins include a polymer obtained by polymerization with a styrene monomer as a main component (not less than 50% by mass). Specifically, examples of styrene resins also include not only homopolymers obtained by individually polymerizing styrene monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.) and copolymers each obtained by copolymerizing two or more styrene monomers, but also copolymers of styrene monomers and other monomers that can be copolymerized with styrene monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; $\alpha$, $\beta$-unsaturated carboxylic acids or acid anhydrides thereof such as maleic anhydride; and the like.

Among them, $\alpha$-methylstyrene resins (a-methylstyrene homopolymer, a copolymer of $\alpha$-methylstyrene and styrene, etc.) are preferable.

A coumarone-indene resin is a resin that contains coumarone and indene as monomer components that form the skeleton (main chain) of the resin, and examples of the monomer component contained in the skeleton, other than coumarone and indene, include styrene, $\alpha$-methylstyrene, methylindene, and vinyltoluene.

Examples of terpene resins include polyterpenes, terpene phenols, and aromatic modified terpene resins.

Polyterpenes are resins obtained by polymerizing terpene compounds, and hydrogenated products thereof. The terpene compounds are hydrocarbons represented by a composition of $(C_5H_8)_n$ and oxygenated derivatives thereof, and are compounds having, as a basic backbone, a terpene classified into monoterpene ($C_{10}H_{16}$), sesquiterpene

($C_{15}H_{24}$), diterpene ($C_{20}H_{32}$), and the like, and examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes also include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins.

Examples of terpene phenols include resins obtained by copolymerization of the above terpene compound and a phenolic compound, and resins obtained by hydrogenating the resins, and specific examples of terpene phenols include resins obtained by condensation of the above terpene compound, a phenolic compound, and formalin. Examples of phenolic compounds include phenol, bisphenol A, cresol, and xylenol.

Examples of aromatic modified terpene resins include resins obtained by modifying a terpene resin with an aromatic compound, and resins obtained by hydrogenating the resins. The aromatic compound is not particularly limited as long as the aromatic compound is a compound having an aromatic ring, but examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

Examples of the phenolic resins include p-t-butylphenol acetylene resins, and specifically include resins obtained by condensation reaction of p-t-butylphenol and acetylene.

The acrylic resins are not particularly limited, but a non-solvent type acrylic resin can be suitably used since a resin containing less impurities and having a sharp molecular weight distribution is obtained.

Examples of the non-solvent type acrylic resin include a (meth)acrylic resin (polymer) synthesized by a high-temperature continuous polymerization method (high-temperature continuous bulk polymerization method) (the methods disclosed in US Patent No. 4,414,370, Japanese Laid-Open Patent Publication No. 59-6207, Japanese Examined Patent Publication No. 5-58005, Japanese Laid-Open Patent Publication No. 1-313522, US Patent No. 5,010,166, annual search report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present invention, (meth)acrylic means methacrylic and acrylic.

The acrylic resin preferably does not substantially contain a polymerization initiator, a chain transfer agent, an organic solvent, etc., which are sub-materials. In addition, the acrylic resin is preferably a resin that is obtained by continuous polymerization and has a relatively narrow composition distribution and a relatively narrow molecular weight distribution.

As described above, preferably, the acrylic resin does not substantially contain a polymerization initiator, a chain transfer agent, an organic solvent, etc., which are sub-materials, that is, it has high purity. The purity of the acrylic resin (the proportion of resin contained in the resin) is preferably not less than 95% by mass and more preferably not less than 97% by mass.

Examples of the monomer component that forms the acrylic resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

As the monomer component that forms the acrylic resin, an aromatic vinyl such as styrene, α-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic resin may be a resin composed of only a (meth)acrylic component or may be a resin also containing a component other than a (meth)acrylic component.

In addition, the acrylic resin may have a hydroxyl group, a carboxyl group, a silanol group, or the like.

As commercially available products of the organic compound (C) (mineral oils, vegetable oils, low-temperature plasticizers containing a hetero atom, resins, etc.), products of Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., FUJI KOSAN COMPANY, LTD., Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., Arakawa Chemical Industries, Ltd., Taoka Chemical Co., Ltd., etc., can be used.

The rubber composition preferably contains a filler since sufficient rubber strength is achieved and favorable abrasion resistance, favorable grip performance, etc., can be imparted.

Examples of the filler include fillers composed of carbon atoms and fillers composed of inorganic substances. Examples of the fillers composed of carbon atoms include carbon black. Examples of the fillers composed of inorganic substances include silica, metal salts of sulfuric acid, silicon carbide, and a compound represented by the following formula.

$mM \cdot xSiOy \cdot zH_2O$

(wherein M is at least one metal selected from the group consisting of Al, Mg, Ti, Ca, and Zr, or an oxide or hydroxide of the metal, "m" is an integer from 1 to 5, "x" is an integer from 0 to 10, "y" is an integer from 2 to 5, and "z" is an integer from 0 to 10.)

Examples of the compound represented by the above formula include alumina, hydrated alumina, aluminum hydroxide, magnesium hydroxide, talc, titanium white, titanium black, calcium oxide, calcium hydroxide, aluminum calcium oxide, clay, pyrophyllite, bentonite, aluminum silicate, calcium silicate, aluminum calcium silicate, magnesium silicate, zirconium, and zirconium oxide.

These fillers may be used individually, or two or more of these fillers may be used in combination.

The amount of the filler per 100 parts by mass of the rubber component is preferably not less than 10 parts by mass, more preferably not less than 30 parts by mass, and further preferably not less than 45 parts by mass. By setting this amount to be not less than the lower limit, sufficient rubber strength tends to be achieved. In addition, this amount is preferably not greater than 200 parts by mass, more preferably not greater than 150 parts by mass, and further preferably not greater than 100 parts by mass. By setting this amount to be not greater than the upper limit, favorable processability of the rubber composition tends to be achieved.

From the viewpoint of the above performance balance, the rubber composition preferably contains carbon black as a filler. The carbon black is not particularly limited, but examples thereof include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. These carbon blacks may be used individually, or two or more of these carbon blacks may be used in combination.

The amount of the carbon black per 100 parts by mass of the rubber component is preferably not less than 10 parts by mass, more preferably not less than 30 parts by mass, and further preferably not less than 45 parts by mass. By setting this amount to be not less than the lower limit, sufficient rubber strength tends to be achieved. In addition, this amount is preferably not greater than 200 parts by mass, more preferably not greater than 150 parts by mass, and further preferably not greater than 100 parts by mass. By setting this amount to be not greater than the upper limit, favorable processability of the rubber composition tends to be achieved.

The nitrogen adsorption specific surface area ($N_2SA$) of the carbon black is preferably not less than 50 $m^2/g$, more preferably not less than 80 $m^2/g$, and further preferably not less than 100 $m^2/g$. By setting the $N_2SA$ to be not less than the lower limit, reinforcement is improved, and sufficient abrasion resistance and sufficient grip performance tend to be achieved. In addition, the $N_2SA$ is preferably not greater than 200 $m^2/g$, more preferably not greater than 150 $m^2/g$, and further preferably not greater than 130 $m^2/g$. By setting the $N_2SA$ to be not greater than the upper limit, favorable dispersibility of the carbon black is easily obtained, and favorable abrasion resistance tends to be achieved.

The nitrogen adsorption specific surface area of the carbon black can be obtained by JIS K6217-2: 2001.

In the rubber composition, silica can be also suitably used as a filler. Examples of the silica include dry-process silica (anhydrous silica) and wet-process silica (hydrous silica). Among them, wet-process silica is preferable for the reason that it has a higher silanol group content. As commercially available products, products of Degussa, Rhodia, Tosoh Silica Corporation, Solvay Japan, Ltd., Tokuyama Corporation, etc., can be used. These types of silica may be used individually, or two or more of these types of silica may be used in combination. In the case where silica is used as a filler, the amount of the silica is preferably in the above range for the amount of the filler.

The nitrogen adsorption specific surface area ($N_2SA$) of the silica is preferably not less than 40 $m^2/g$, more preferably not less than 70 $m^2/g$, and further preferably not less than 110 $m^2/g$. By setting the $N_2SA$ to be not less than the lower limit, sufficient wet grip performance tends to be achieved. In addition, the $N_2SA$ of the silica is preferably not greater than 220 $m^2/g$ and more preferably not greater than 200 $m^2/g$. By setting the $N_2SA$ to be not greater than the upper limit, favorable dispersibility tends to be achieved.

The $N_2SA$ of the silica is a value measured by the BET method according to ASTM D3037-93.

In the case where the rubber composition contains silica, the rubber composition preferably further contains a silane coupling agent. The silane coupling agent is not particularly limited, and examples of the silane coupling agent include any silane coupling agents that are conventionally used in combination with silica in the rubber industry. Specific examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3 -triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive; vinyl silane coupling agents such as vinyltriethoxysilane and

vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. As commercially available products, products of Degussa, Momentive, Shin-Etsu Silicones, Tokyo Chemical Industry Co., Ltd., AZmax, Dow Corning Toray Co., Ltd., etc., can be used. These silane coupling agents may be used individually, or two or more of these silane coupling agents may be used in combination.

The amount of the silane coupling agent per 100 parts by mass of the silica is preferably not less than 3 parts by mass and more preferably not less than 5 parts by mass. When this amount is not less than 3 parts by mass, an effect caused by the addition tends to be achieved. In addition, this amount is preferably not greater than 20 parts by mass and more preferably not greater than 15 parts by mass. When this amount is not greater than 20 parts by mass, an effect corresponding to the blending amount is achieved, and favorable processability during kneading tends to be achieved.

From the standpoint of crack resistance, ozone resistance, etc., the rubber composition preferably contains an antioxidant.

The antioxidant is not particularly limited, but examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N' -phenyl-p-phenylenediamine, and N,N' -di-2-naphthyl-p-phenylenediamine; quinoline-based antioxidants such as a polymer of 2,2,4-trimethyl-1,2-dihydroquinoline; monophenol antioxidants such as 2,6-di-t-butyl-4-methylphenol and styrenated phenol; and bis-, tris-, and poly-phenol antioxidants such as tetrakis-[methylene-3-(3',5'-di-t-butyl-4'-hydroxyphenyl)propionate]methane. Among them, the p-phenylenediamine antioxidants and the quinoline-based antioxidants are preferable, and N-(1,3-dimethylbutyl)-N'-phenyl-p-phenylenediamine, and a polymer of 2,2,4-trimethyl-1,2-dihydroquinoline are more preferable. As commercially available products, for example, products of Seiko Chemical Co., Ltd., Sumitomo Chemical Co., Ltd., Ouchi Shinko Chemical Industrial Co., Ltd., Flexsys, etc., can be used.

The amount of the antioxidant per 100 parts by mass of the rubber component is preferably not less than 0.2 parts by mass and more preferably not less than 0.5 parts by mass. By setting this amount to be not less than the lower limit, sufficient ozone resistance tends to be achieved. This amount is preferably not greater than 7.0 parts by mass and more preferably not greater than 4.0 parts by mass. By setting this amount to be not greater than the upper limit favorable tire appearance tends to be achieved.

The rubber composition preferably contains stearic acid. From the viewpoint of the above performance balance, the amount of stearic acid per 100 parts by mass of the rubber component is preferably 0.5 to 10 parts by mass and more preferably 0.5 to 5 parts by mass.

As the stearic acid, a conventionally known one can be used, and, for example, products of NOF Corporation, Kao Corporation, Wako Pure Chemical Industries, Ltd., New Japan Chemical Co., Ltd., etc., can be used.

The rubber composition preferably contains zinc oxide. From the viewpoint of the above performance balance, the amount of zinc oxide per 100 parts by mass of the rubber component is preferably 0.5 to 10 parts by mass and more preferably 1 to 5 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

The rubber composition may contain a wax. The wax is not particularly limited, and examples of the wax include petroleum waxes and natural waxes. In addition, a synthetic wax obtained by refining or chemically treating a plurality of waxes can be used. These waxes may be used individually, or two or more of these waxes may be used in combination.

Examples of the petroleum waxes include paraffin wax and microcrystalline wax. The natural waxes are not particularly limited as long as the waxes are waxes derived from materials other than petroleum. Examples of the natural waxes include: vegetable waxes such as candelilla wax, carnauba wax, Japan wax, rice wax, and jojoba wax; animal waxes such as beeswax, lanolin, and whale wax; mineral waxes such as ozokerite, ceresin, and petrolatum; and refined products thereof. As commercially available products, for example, products of Ouchi Shinko Chemical Industrial Co., Ltd., NIPPON SEIRO CO., LTD., Seiko Chemical Co., Ltd., etc. can be used. The amount of the wax may be set as appropriate in view of ozone resistance and cost.

The rubber composition preferably contains sulfur from the standpoint of moderately forming crosslinked chains in the polymer chain and imparting the favorable performance balance.

The amount of the sulfur per 100 parts by mass of the rubber component is preferably not less than 0.1 parts by mass, more preferably not less than 0.5 parts by mass, and further preferably not less than 1.0 part by mass. This amount is preferably not greater than 6.0 parts by mass, more preferably not greater than 4.0 parts by mass, and further preferably not greater than 3.0 parts by mass. By setting this amount within the above range, the favorable performance balance tends to be achieved.

Examples of the sulfur include powdery sulfur, precipitated sulfur, colloidal sulfur, insoluble sulfur, highly dispersible sulfur, and soluble sulfur, which are generally used in the rubber industry. As commercially available products, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used. These sulfurs may be used individually, or two or more of these sulfurs may be used in combination.

The rubber composition preferably contains a vulcanization accelerator.

The amount of the vulcanization accelerator is not particularly limited, and may be freely determined in accordance with a desired vulcanization rate or crosslink density. The amount of the vulcanization accelerator per 100 parts by mass of the rubber component is normally 0.3 to 10 parts by mass and preferably 0.5 to 7 parts by mass.

The type of the vulcanization accelerator is not particularly limited, and vulcanization accelerators that are normally used can be used. Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination. Among them, from the standpoint of the above performance balance, sulfenamide-based vulcanization accelerators and guanidine-based vulcanization accelerators are preferable.

In addition to the above components, the rubber composition may contain ingredients that are generally used in the tire industry, for example, materials such as a mold lubricant, as appropriate.

As a method for producing the rubber composition, a known method can be used. For example, the rubber composition can be produced by a method in which the above respective components are kneaded using a rubber kneading device such as an open roll and a Banbury mixer and then vulcanization is performed.

As for the kneading conditions, in a base kneading step of kneading the additives other than a vulcanizing agent and the vulcanization accelerator, the kneading temperature is normally 50 to 200°C and preferably 80 to 190°C, and the kneading time is normally 30 seconds to 30 minutes and preferably 1 minute to 30 minutes. In a finish kneading step of kneading the vulcanizing agent and the vulcanization accelerator, the kneading temperature is normally not higher than 100°C and preferably room temperature to 80°C. In addition, a composition obtained by kneading the vulcanizing agent and the vulcanization accelerator is normally subjected to vulcanization processing such as press vulcanization. The vulcanization temperature is normally 120 to 200°C and preferably 140 to 180°C.

The peak temperature of tan$\delta$ of the rubber composition measured under conditions of a strain of 1% and a frequency of 10 Hz is preferably not higher than 10°C. By setting the peak temperature to be not higher than 10°C, embrittlement at the temperature at which rubber is used tends to be able to be inhibited. The peak temperature is more preferably not higher than 7°C and further preferably not higher than 4°C. The lower limit of the peak temperature is not particularly limited, but the peak temperature is preferably not lower than - 10°C and more preferably not lower than -5°C.

The peak temperature of a temperature dispersion curve of tan$\delta$ can be measured by a method described later in EXAMPLES.

The peak temperature can be adjusted by a method such as adjustment of the aromatic vinyl monomer unit amount in the diene polymer (A) and adjustment of the aromatic vinyl monomer unit amount in the diene copolymer (B). Specifically, the peak temperature is reduced by reduction of the aromatic vinyl monomer unit amount in the diene polymer (A), increase of the aromatic vinyl monomer unit amount in the diene copolymer (B), or the like, and the peak temperature can be adjusted according to such tendency.

The rubber composition is suitably used for treads (cap treads), but may be used for members other than treads, for example, for sidewalls, base treads, under treads, clinch apexes, bead apexes, breaker cushion rubbers, carcass cord covering rubbers, insulations, chafers, inner liners, etc., and side reinforcing layers of run flat tires.

[Pneumatic Tire]

The pneumatic tire of the present invention can be produced by a normal method using the above rubber composition.

Specifically, an unvulcanized tire can be formed by extruding a rubber composition obtained by blending the above components, in an unvulcanized state so as to correspond to the shape of a tread, and forming the extruded rubber composition together with other tire members on a tire forming machine by a general method. A tire is obtained by heating and pressurizing the unvulcanized tire in a vulcanizing machine.

The pneumatic tire of the present invention can be used as, for example, a tire for a passenger car, a tire for a truck or a bus, a tire for a two-wheeled automotive vehicle, and a high performance tire (tire for racing).

EXAMPLES

The present invention will be specifically described by means of examples, but the present invention is not limited to these examples.

Various chemicals used in production examples are described below. The chemicals were purified according to conventional methods as necessary.

Hexane: anhydrous hexane manufactured by Kanto Chemical Co., Inc.
Isopropanol: isopropanol manufactured by Kanto Chemical Co., Inc.
TMEDA: tetramethylethylenediamine manufactured by Wako Pure Chemical Industries, Ltd.
n-butyllithium: n-butyllithium/hexane solution manufactured by Tosoh Corporation
Butadiene: 1,3-butadiene manufactured by Takachiho Chemical Industrial Co., Ltd.
Styrene: styrene manufactured by Wako Pure Chemical Industries, Ltd.
Isoprene: isoprene manufactured by Wako Pure Chemical Industries, Ltd.
Myrcene: myrcene manufactured by Wako Pure Chemical Industries, Ltd.
Farnesene: farnesene manufactured by Nippon Terpene Chemicals, Inc.

Methods for evaluating a synthesized polymer are as follows.

(Measurement of Weight-Average Molecular Weight (Mw) and Number-Average Molecular Weight (Mn))

For a weight-average molecular weight (Mw) and a number-average molecular weight (Mn), the GPC-8000 series apparatus manufactured by Tosoh Corporation was used, a differential refractometer was used as a detector, and a molecular weight was converted based on polystyrene standard.

(Measurement of Aromatic Vinyl Monomer Unit Amount (Styrene Amount))

An aromatic vinyl monomer unit amount (styrene amount) was calculated according to JIS-K-6239.

(Measurement of Hydrogenation Rate of Conjugated Diene Portion of Copolymer)

A hydrogenation rate was calculated from reduction of a proton NMR spectrum of an unsaturated bond portion at 100 MHz measured at a concentration of 15% by mass using carbon tetrachloride as a solvent.

(Production Example 1-1) Production of diene polymer A-1

Together with 900 g of hexane, 70 g of butadiene, and 30 g of styrene, 0.02 mmol of TMEDA was put into a 3-L pressure-resistant stainless polymerization vessel that had been dried and purged with nitrogen. Next, in order to detoxify impurities acting to inactivate a polymerization initiator in advance, a small amount of an n-butyllithium/hexane solution was put as a scavenger into the polymerization vessel. Furthermore, an n-butyllithium/hexane solution (0.3 mmol as an amount of n-butyllithium) was added, and then a polymerization reaction was carried out at 50°C for 3 hours. After 3 hours, 1.15 ml of a 1 M isopropanol/hexane solution was dripped into the reaction solution to terminate the reaction. Next, the polymerization solution was evaporated at room temperature for 24 hours and further dried under reduced pressure at 80°C for 24 hours to obtain a diene polymer A-1.

The polymerization inversion rate was nearly 100%. The weight-average molecular weight (Mw) and the molecular weight distribution (Mw/Mn) of the obtained diene polymer A-1 (SBR) were 350 thousand and 1.12, respectively. The aromatic vinyl monomer unit amount (styrene amount) was 30% by mass.

(Production Example 1-2) Production of Diene Polymer A-2

A diene polymer A-2 was obtained by performing the same treatment as in Production Example 1-1, except that the amount of the n-butyllithium/hexane solution to be added after impurities were detoxified was set to 0.1 mmol as an amount of n-butyllithium.

The weight-average molecular weight (Mw) and the molecular weight distribution (Mw/Mn) of the obtained diene polymer A-2 (SBR) were 1.05 million and 1.15, respectively. The aromatic vinyl monomer unit amount (styrene amount) was 30% by mass.

(Production Example 2-1) Production of Diene Copolymer B-1

Together with 900 g of hexane, 60 g of butadiene, and 40 g of styrene, 0.02 mmol of TMEDA was put into a 3-L pressure-resistant stainless polymerization vessel that had been dried and purged with nitrogen. Next, in order to detoxify impurities acting to inactivate a polymerization initiator in advance, a small amount of an n-butyllithium/hexane solution was put as a scavenger into the polymerization vessel. Furthermore, an n-butyllithium/hexane solution (3.0 mmol as an amount of n-butyllithium) was added, and then a polymerization reaction was carried out at 50°C for 3 hours. After 3 hours, 50 ml of a 1 M isopropanol/hexane solution was dripped into the reaction solution to terminate the reaction. Next, the polymerization solution was evaporated at room temperature for 24 hours and further dried under reduced pressure at 80°C for 24 hours to obtain a diene copolymer B-1.

The polymerization inversion rate was nearly 100%. The weight-average molecular weight (Mw) and the molecular weight distribution (Mw/Mn) of the obtained diene copolymer B-1 (styrene butadiene copolymer) were 3 thousand and 1.10, respectively. The aromatic vinyl monomer unit amount (styrene amount) was 40% by mass.

(Production Example 2-2) Production of Diene Copolymer B-2

A diene copolymer B-2 was obtained by performing the same treatment as in Production Example 2-1, except that 60 g of butadiene was changed to 50 g of butadiene and 10 g of isoprene.

The polymerization inversion rate was nearly 100%. The weight-average molecular weight (Mw) and the molecular weight distribution (Mw/Mn) of the obtained diene copolymer B-2 were 3 thousand and 1.10, respectively. The aromatic vinyl monomer unit amount (styrene amount) was 40% by mass.

(Production Example 2-3) Production of Diene Copolymer B-3

A diene copolymer B-3 was obtained by performing the same treatment as in Production Example 2-1, except that 60 g of butadiene was changed to 50 g of butadiene and 10 g of myrcene.

The polymerization inversion rate was nearly 100%. The weight-average molecular weight (Mw) and the molecular weight distribution (Mw/Mn) of the obtained diene copolymer B-3 were 3 thousand and 1.10, respectively. The aromatic vinyl monomer unit amount (styrene amount) was 40% by mass.

(Production Example 2-4) Production of Diene Copolymer B-4

A diene copolymer B-4 was obtained by performing the same treatment as in Production Example 2-1, except that 60 g of butadiene was changed to 50 g of butadiene and 10 g of farnesene.

The polymerization inversion rate was nearly 100%. The weight-average molecular weight (Mw) and the molecular weight distribution (Mw/Mn) of the obtained diene copolymer B-4 were 3 thousand and 1.10, respectively. The aromatic vinyl monomer unit amount (styrene amount) was 40% by mass.

(Production Example 2-5) Production of Diene Copolymer B-5

200 g of the diene copolymer B-2 (unhydrogenated product) obtained in Production Example 2-2, 300g of n-hexane, and 10g of 10% palladium carbon were added to a pressure-resistant vessel, purged with nitrogen, and then purged with hydrogen such that the pressure was 5.0 $kg/cm^2$, and a reaction was carried out until hydrogen absorption reached 30% of the theoretical value (hydrogen amount required for all the double bonds to be hydrogenated). Thereafter, the reaction solution was filtrated to remove the catalyst, and then the filtrate was evaporated at room temperature for 24 hours and further dried under reduced pressure at 80°C for 24 hours to obtain a diene copolymer B-5 (hydrogenated product).

The hydrogenation rate of the obtained diene copolymer B-5 (hydrogenated product) was 30%. The Mw, the Mw/Mn, and the styrene amount of the diene copolymer B-5 (hydrogenated product) were equal to those of the diene copolymer B-2 (unhydrogenated product).

(Production Example 2-6) Production of Diene Copolymer B-6

A diene copolymer B-6 (hydrogenated product) was obtained by performing the same treatment as in Production Example 2-5, except that the diene copolymer B-2 (unhydrogenated product) obtained in Production Example 2-2 was changed to the diene copolymer B-3 (unhydrogenated product) obtained in Production Example 2-3.

The hydrogenation rate of the obtained diene copolymer B-6 (hydrogenated product) was 30%. The Mw, the Mw/Mn, and the styrene amount of the diene copolymer B-6 (hydrogenated product) were equal to those of the diene

copolymer B-3 (unhydrogenated product).

(Production Example 2-7) Production of Diene Copolymer B-7

A diene copolymer B-7 (hydrogenated product) was obtained by performing the same treatment as in Production Example 2-5, except that the diene copolymer B-2 (unhydrogenated product) obtained in Production Example 2-2 was changed to the diene copolymer B-4 (unhydrogenated product) obtained in Production Example 2-4.
The hydrogenation rate of the obtained diene copolymer B-7 (hydrogenated product) was 30%. The Mw, the Mw/Mn, and the styrene amount of the diene copolymer B-7 (hydrogenated product) were equal to those of the diene copolymer B-4 (unhydrogenated product).

(Production Example 2-8) Production of Diene Copolymer B-8

A diene copolymer B-8 (hydrogenated product) was obtained by performing the same treatment as in Production Example 2-5, except that the amount of the n-butyllithium/hexane solution to be added after impurities were detoxified was set to 1.0 mmol as an amount of n-butyllithium.
The weight-average molecular weight (Mw) and the molecular weight distribution (Mw/Mn) of the obtained diene copolymer B-8 (hydrogenated product) were 10 thousand and 1.10, respectively, the aromatic vinyl monomer unit amount (styrene amount) thereof was 40% by mass, and the hydrogenation rate thereof was 30%.

(Production Example 2-9) Production of Diene Copolymer B-9

A diene copolymer B-9 (hydrogenated product) was obtained by performing the same treatment as in Production Example 2-5, except that a reaction was carried out until hydrogen absorption reached 60% of the theoretical value.
The weight-average molecular weight (Mw) and the molecular weight distribution (Mw/Mn) of the obtained diene copolymer B-9 (hydrogenated product) were 3 thousand and 1.10, respectively, the aromatic vinyl monomer unit amount (styrene amount) thereof was 40% by mass, and the hydrogenation rate thereof was 60%.

(Production Example 2-10) Production of Diene Copolymer B-10

A diene copolymer B-10 (hydrogenated product) was obtained by performing the same treatment as in Production Example 2-5, except that the amount of butadiene was changed to 35 g, the amount of isoprene was changed to 5 g, and the amount of styrene was changed to 60 g.
The weight-average molecular weight (Mw) and the molecular weight distribution (Mw/Mn) of the obtained diene copolymer B-10 (hydrogenated product) were 3 thousand and 1.10, respectively, the aromatic vinyl monomer unit amount (styrene amount) thereof was 60% by mass, and the hydrogenation rate thereof was 30%.
Various chemicals used in examples and comparative examples are collectively described below.

Diene polymers A-1 and A-2: Production Examples 1-1 and 1-2
NR: TSR
BR: BR 150B (cis content: 97% by mass) manufactured by Ube Industries, Ltd.
Diene copolymers B-1 to B-10: Production Examples 2-1 to 2-10
Carbon black: Show Black N220 ($N_2SA$: 111 $m^2/g$) manufactured by Cabot Japan K.K.
Silica: Ultrasil VN3 ($N_2SA$: 175 $m^2/g$) manufactured by Evonik Degussa GmbH
Silane coupling agent: Si75 (bis(3-triethoxysilylpropyl)disulfide) manufactured by Evonik Degussa GmbH
Oil: mineral oil PW-380 (liquid form at 130°C)
Stearic acid: stearic acid manufactured by NOF Corporation
Zinc oxide: Zinc Oxide No. 1 manufactured by Mitsui Mining & Smelting Co., Ltd.
Antioxidant: Nocrac 6C (N-(1,3-dimethylbutyl)-N'-phenyl-p-phenylenediamine) manufactured by Ouchi Shinko Chemical Industrial Co., Ltd.
Vulcanization accelerator D: Nocceler D (1,3-diphenylguanidine) manufactured by Ouchi Shinko Chemical Industrial Co., Ltd.
Vulcanization accelerator NS: Nocceler NS (N-tert-butyl-2-benzothiazolylsulfenamide) manufactured by Ouchi Shinko Chemical Industrial Co., Ltd.
Sulfur: powdery sulfur manufactured by Tsurumi Chemical Industry Co., Ltd.

<Examples and Comparative Examples>

(Production Method for Rubber Composition)

According to each blending formula in Table 1, the blending materials were kneaded using a 1.7-L Banbury mixer manufactured by Kobe Steel, Ltd., then the sulfur and the vulcanization accelerators were added and kneaded into the obtained kneaded rubber on an open roll, and the mixture was vulcanized at 150°C for 30 minutes to obtain a rubber composition.

The obtained rubber compositions were evaluated by the following test methods, and the results are shown in Tables 1 and 2. A reference comparative example in Table 1 is Comparative Example 1-1, and a reference comparative example in Table 2 is Comparative Example 2-1.

(Adhesion of Rubber)

The degrees of adhesion of the kneaded rubber in the Banbury mixer step and the open roll step were graded at three levels on the basis of the following criteria.

○: Almost no rubber adheres, and no problem arises.
Δ: The rubber adheres, and more time is taken to discharge the rubber as compared to "○".
×: The rubber considerably adheres, and more time is taken to discharge the rubber as compared to "Δ".

(Processability Index)

For unvulcanized rubbers of the above rubber compositions, a Mooney viscosity was measured at 100°C according to JIS K6300 (1994), and is indicated as an index with the result of the corresponding reference comparative example being set as 100. A lower index indicates that the result is better, and no problem arises in practical use if the index is equal to or lower than 140.

(Fracture Resistance Characteristic Index)

According to JIS K 6301-1995, a tensile test was carried out on the obtained rubber compositions (vulcanized rubbers), and tensile strength (Tb) was measured and indexed with the result of the corresponding reference comparative example being set as 100. A higher index indicates that the fracture resistance characteristics are better.

(Wet Grip Performance Index and Dry Grip Performance Index)

The obtained rubber compositions (vulcanized rubbers) were evaluated with a wet road surface and a dry road surface reproduced on a skid tester. The results were indexed with the result of the corresponding reference comparative example being set as 100. A higher value indicates that the wet grip performance or the dry grip performance is better.

(Peak Temperature of tanδ and Peak Height of tan δ)

A strip-shaped test piece having a width of 2 mm and a length of 40 mm was punched out from each of the obtained rubber compositions (vulcanized rubbers), tanδ was measured for the test piece using a viscoelasticity measuring device (manufactured by Ueshima Seisakusho Co., Ltd.) under conditions of a stain of 1% and a frequency of 10 Hz in a temperature range of -50°C to 150°C, and a temperature dispersion curve of tanδ was obtained. From the curve, the peak temperature of tanδ was obtained, and the peak height (index) was obtained with the result of the corresponding reference comparative example being set as 100.

(Grip Performance)

Tires having treads formed from the rubber compositions were produced, and a car was actually caused to run with the tires on a test course having a dry asphalt road surface. The test driver evaluated stability of control at steering during running, and the evaluation result is indicated as an index with the result of the corresponding reference comparative example being set as 100. A higher value indicates that the grip performance is higher and better.

(Abrasion Resistance)

Tires having treads formed from the rubber compositions were produced, and a car was actually caused to run with the tires on a test course having a dry asphalt road surface. The groove depth of the tire tread rubber after the running was evaluated as abrasion resistance. A larger groove depth indicates that the abrasion resistance is better. The groove depth is indicated as an index with the result of the corresponding reference comparative example being set as 100. A higher index indicates that the abrasion resistance is higher.

[Table 1]

| | | Comparative Example | | | | | Example | | | | | | |
|---|---|---|---|---|---|---|---|---|---|---|---|---|---|
| | | 1-1 | 1-2 | 1-3 | 1-4 | 1-5 | 1-1 | 1-2 | 1-3 | 1-4 | 1-5 | 1-6 | 1-7 |
| Blending formula (parts by mass) | Diene polymer A-1 | 100 | 100 | 100 | 100 | 100 | 100 | 100 | 100 | | 100 | 100 | 100 |
| | Diene polymer A-2 | | | | | | | | | 100 | | | |
| | Diene copolymer B-1 | 30 | | | | 30 | | | | | | | |
| | Diene copolymer B-2 | | 30 | | | | | | | | | | |
| | Diene copolymer B-3 | | | 30 | | | | | | | | | |
| | Diene copolymer B-4 | | | | 30 | | | | | | | | |
| | Diene copolymer B-5 | | | | | | 30 | | | 30 | | | |
| | Diene copolymer B-6 | | | | | | | 30 | | | | | |
| | Diene copolymer B-7 | | | | | | | | 30 | | | | |
| | Diene copolymer B-8 | | | | | | | | | | 30 | | |
| | Diene copolymer B-9 | | | | | | | | | | | 30 | |
| | Diene copolymer B-10 | | | | | | | | | | | | 30 |
| | Carbon black | 65 | 65 | 65 | 65 | 65 | 65 | 65 | 65 | 65 | 65 | 65 | 65 |
| | Oil | 50 | 50 | 50 | 50 | 5 | 50 | 50 | 50 | 50 | 50 | 50 | 50 |
| | Stearic acid | 2 | 2 | 2 | 2 | 2 | 2 | 2 | 2 | 2 | 2 | 2 | 2 |
| | Zinc oxide | 3 | 3 | 3 | 3 | 3 | 3 | 3 | 3 | 3 | 3 | 3 | 3 |
| | Antioxidant | 1 | 1 | 1 | 1 | 1 | 1 | 1 | 1 | 1 | 1 | 1 | 1 |
| | Vulcanization accelerator D | 0.4 | 0.4 | 0.4 | 0.4 | 0.4 | 0.4 | 0.4 | 0.4 | 0.4 | 0.4 | 0.4 | 0.4 |
| | Vulcanization accelerator NS | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 |
| Styrene amount of diene copolymer (B) − styrene amount of diene polymer (A) | | 10 | 10 | 10 | 10 | 10 | 10 | 10 | 10 | 10 | 10 | 10 | 30 |
| Evaluation | Adhesion of rubber | Δ | Δ | Δ | Δ | × | ○ | ○ | ○ | ○ | ○ | ○ | ○ |
| | Processability index | 100 | 93 | 101 | 103 | 140 | 101 | 121 | 121 | 119 | 123 | 121 | 119 |
| | Fracture resistance characteristic index | 100 | 101 | 95 | 82 | Embrittled | 123 | 126 | 121 | 126 | 128 | 127 | 121 |
| | Wet grip performance index | 100 | 101 | 101 | 101 | Embrittled | 104 | 119 | 120 | 120 | 121 | 120 | 121 |
| | Dry grip performance index | 100 | 99 | 100 | 101 | Embrittled | 103 | 115 | 116 | 118 | 117 | 117 | 122 |
| | Peak temperature of tanδ (°C) | 5 | 5 | 5 | 5 | 12 | 2 | 2 | 2 | 2 | 2 | 2 | 1 |
| | Peak height index of tanδ | 100 | 92 | 92 | 92 | 102 | 105 | 105 | 105 | 104 | 108 | 108 | 108 |
| | Grip performance | 100 | 102 | 103 | 105 | Embrittled | 102 | 103 | 105 | 107 | 107 | 107 | 112 |
| | Abrasion resistance | 100 | 100 | 93 | 90 | Embrittled | 102 | 105 | 107 | 119 | 110 | 109 | 107 |

[Table 2]

| | | Comparative Example | Example |
|---|---|---|---|
| | | 2-1 | 2-1 |
| Blending formula (parts by mass) | Diene polymer A-1 | 80 | 80 |
| | NR | 10 | 10 |
| | BR | 10 | 10 |
| | Diene copolymer B-1 | 40 | |
| | Diene copolymer B-5 | | 40 |
| | Carbon black | 10 | 10 |
| | Silica | 40 | 40 |
| | Silane coupling agent | 3.2 | 3.2 |
| | Oil | 30 | 30 |
| | Stearic acid | 2 | 2 |
| | Zinc oxide | 3 | 3 |
| | Antioxidant | 1 | 1 |
| | Vulcanization accelerator D | 0.4 | 0.4 |
| | Vulcanization accelerator NS | 1 | 1 |
| | Sulfur | 1.5 | 1.5 |
| Styrene amount of diene copolymer (B) − styrene amount of diene polymer (A) | | 10 | 10 |
| Evaluation | Adhesion of rubber | Δ | ○ |
| | Processability index | 100 | 110 |
| | Fracture resistance characteristic index | 100 | 113 |
| | Wet grip performance index | 100 | 121 |
| | Dry grip performance index | 100 | 118 |
| | Peak temperature of tanδ (°C) | 4 | 1 |
| | Peak height index of tanδ | 100 | 109 |
| | Grip performance | 100 | 107 |
| | Abrasion resistance | 100 | 109 |

As seen from Tables 1 and 2, the rubber compositions of Examples, which contain SBR (the diene polymers A-1 and A-2) having predetermined Mw and a hydrogenated styrene butadiene copolymer (diene copolymers B-5 to B-10) having predetermined Mw and having a linear conjugated diene monomer unit (butadiene unit) and a branched conjugated diene monomer unit (isoprene unit, myrcene unit, farnesene unit), and the tires in which the rubber compositions were used were excellent in abrasion resistance and grip performance (dry grip performance, wet grip performance) as compared to Comparative Examples in which the unhydrogenated styrene butadiene copolymer was used. In addition, in Examples, the adhesion of the rubber was low, and the processability of the unvulcanized rubber and the fracture resistance characteristics of the vulcanized rubber were also excellent.

A rubber composition in which a diene copolymer (B) is used that can improve abrasion resistance and grip performance in a balanced manner, and a pneumatic tire are provided. The diene copolymer (B) has a linear conjugated diene monomer unit and a branched conjugated diene monomer unit, has a weight-average molecular weight of 1000 to 3000000, has a hydrogenation rate of not less than 15%, and has a mass ratio of the linear conjugated diene monomer unit amount to the branched conjugated diene monomer unit amount in 100% by mass of the diene copolymer (B) (linear conjugated diene monomer unit amount/branched conjugated diene monomer unit amount) of 88/12 to 75/25.

## Claims

1. A rubber composition containing 5 to 200 parts by mass of a diene copolymer (B) per 100 parts by mass of a rubber component including a diene polymer (A) having a weight-average molecular weight of 100 thousand to 3 million, wherein the diene copolymer (B) has a linear conjugated diene monomer unit and a branched conjugated diene monomer unit, a weight-average molecular weight of 1000 to 3000000 and a hydrogenation rate of not less than 15%, and wherein the mass ratio of the linear conjugated diene monomer unit amount to the branched conjugated diene monomer unit amount in 100% by mass of the diene copolymer (B) (linear conjugated diene monomer unit amount/branched conjugated diene monomer unit amount) is 88/12 to 75/25.

2. The rubber composition according to claim 1, wherein a branched conjugated diene monomer unit amount in 100% by mass of the diene copolymer (B) is not less than 1% by mass.

3. The rubber composition according to claim 1 or 2, wherein a difference between aromatic vinyl monomer unit amounts in the diene copolymer (B) and the diene polymer (A) satisfies the following formula,

aromatic vinyl monomer unit amount (% by mass) in 100% by mass of diene copolymer (B) − aromatic vinyl monomer unit amount (% by mass) in 100% by mass of diene polymer (A) $<$ 50% by mass.

4. The rubber composition according to any one of claims 1 to 3, further containing 10 to 200 parts by mass of an organic compound (C) that is in liquid form at 130°C, per 100 parts by mass of the rubber component.

5. The rubber composition according to any one of claims 1 to 4, further containing 10 to 200 parts by mass of a filler per 100 parts by mass of the rubber component.

6. The rubber composition according to any one of claims 1 to 5, wherein a peak temperature of tan$\delta$ of the rubber composition measured under conditions of a strain of 1% and a frequency of 10 Hz is not higher than 10°C.

7. A pneumatic tire produced using the rubber composition according to any one of claims 1 to 6.

## Patentansprüche

1. Kautschukzusammensetzung, enthaltend 5 bis 200 Massenteile eines Diencopolymers (B) pro 100 Massenteile einer Kautschukkomponente, die ein Dienpolymer (A) mit einem gewichtsgemittelten Molekulargewicht von 100000 bis 3 Millionen beinhaltet, wobei das Diencopolymer (B) eine lineare konjugierte Dienmonomereinheit und eine verzweigte konjugierte Dienmonomereinheit, ein gewichtsgemitteltes Molekulargewicht von 1000 bis 3000000 und eine Hydrierungsrate von nicht weniger als 15% aufweist, und wobei das Massenverhältnis der Menge der linearen konjugierten Dienmonomereinheit zur Menge der verzweigten konjugierten Dienmonomereinheit in 100 Massen-% des Diencopolymers (B) (Menge der linearen konjugierten Dienmonomereinheit/Menge der verzweigten konjugierten Dienmonomereinheit) 88/12 bis 75/25 beträgt.

2. Kautschukzusammensetzung nach Anspruch 1, wobei die Menge an verzweigter konjugierter Dienmonomereinheit in 100 Massen-% des Diencopolymers (B) nicht weniger als 1 Massen-% beträgt.

3. Kautschukzusammensetzung nach Anspruch 1 oder 2, wobei eine Differenz zwischen den Mengen an aromatischer Vinylmonomereinheit in dem Diencopolymer (B) und dem Dienpolymer (A) die folgende Formel erfüllt,

Menge an aromatischer Vinylmonomereinheit (Massen-%) in 100 Massen-% des Diencopolymers (B) - Menge an aromatischer Vinylmonomereinheit (Massen-%) in 100 Massen-% des Dienpolymers (A) < 50 Massen-%.

4. Kautschukzusammensetzung nach einem der Ansprüche 1 bis 3, ferner enthaltend 10 bis 200 Massenteile einer organischen Verbindung (C), die bei 130°C in flüssiger Form vorliegt, pro 100 Massenteile der Kautschukkomponente.

5. Kautschukzusammensetzung nach einem der Ansprüche 1 bis 4, ferner enthaltend 10 bis 200 Masseteile eines Füllstoffs pro 100 Masseteile der Kautschukkomponente.

6. Kautschukzusammensetzung nach einem der Ansprüche 1 bis 5, wobei eine Peaktemperatur von tanδ der Kautschukzusammensetzung, gemessen unter Bedingungen einer Dehnung von 1% und einer Frequenz von 10 Hz, nicht höher als 10°C ist.

7. Luftreifen, der unter Verwendung der Gummimischung nach einem der Ansprüche 1 bis 6 hergestellt ist.

**Revendications**

1. Composition de caoutchouc contenant 5 à 200 parties en masse d'un copolymère de diène (B) pour 100 parties en masse d'un composant caoutchouc comprenant un polymère de diène (A) ayant une masse moléculaire moyenne en masse de 100 000 à 3 000 000, dans laquelle le copolymère de diène (B) a un motif monomère de diène conjugué linéaire et un motif monomère de diène conjugué ramifié, une masse moléculaire moyenne en masse de 1 000 à 3 000 000 et un taux d'hydrogénation non inférieur à 15 %, et dans laquelle le rapport en masse de la quantité de motif monomère de diène conjugué linéaire à la quantité de motif monomère de diène conjugué ramifié, dans 100 % en masse du copolymère de diène (B) (quantité de motif monomère de diène conjugué linéaire/ quantité de motif monomère de diène conjugué ramifié) est de 88/12 à 75/25.

2. Composition de caoutchouc selon la revendication 1, dans laquelle la quantité de motif monomère de diène conjugué ramifié, dans 100 % en masse du copolymère de diène (B), n'est pas inférieure à 1 % en masse.

3. Composition de caoutchouc selon la revendication 1 ou 2, dans laquelle la différence entre les quantités de motifs monomères vinylaromatiques dans le copolymère de diène (B) et le polymère de diène (A) satisfait à la formule suivante :

quantité de motif monomère vinylaromatique (% en masse) dans 100 % en masse de copolymère de diène (B) - quantité de motif monomère vinylaromatique (% en masse) dans 100 % en masse de polymère de diène (A) < 50 % en masse.

4. Composition de caoutchouc selon l'une quelconque des revendications 1 à 3, contenant en outre 10 à 200 parties en masse d'un composé organique (C) qui est sous forme liquide à 130°C, pour 100 parties en masse du composant caoutchouc.

5. Composition de caoutchouc selon l'une quelconque des revendications 1 à 4, contenant en outre 10 à 200 parties en masse d'une charge pour 100 parties en masse du composant caoutchouc.

6. Composition de caoutchouc selon l'une quelconque des revendications 1 à 5, dans laquelle la température de pic de tanδ de la composition de caoutchouc, mesurée dans des conditions de déformation de 1 % et de fréquence de 10 Hz, n'est pas supérieure à 10°C.

**7.** Pneu produit par utilisation de la composition de caoutchouc de l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63101440 A
- EP 2824116 A1
- JP 2015086315 A
- EP 2963087 A1
- JP 59161415 A
- JP 2010111753 A
- US 4414370 A
- JP 59006207 A
- JP 5058005 A
- JP 1313522 A
- US 5010166 A